# EUROPEAN PATENT APPLICATION

(11) **EP 3 730 674 A1**
(43) Date of publication of application: **28.10.2020**
(21) Application number: 19908083.9
(22) Date of filing: 16.12.2019
(51) Int. Cl.: C25B 9/00, C25B 1/02, C25B 11/03, C25B 11/04, C25B 11/12

(54) **ELECTROCHEMICAL HYDROGEN PUMP**

(30) Priority: 19.02.2019 JP 2019027681; 06.11.2019 JP 2019201659
(71) Applicant: Panasonic Intellectual Property Management Co., Ltd., Osaka-shi, Osaka 540-6207 (JP)
(72) Inventor: UKAI, Kunihiro, Osaka 540-6207 (JP); NAKAUE, Takayuki, Osaka 540-6207 (JP); KANI, Yukimune, Osaka 540-6207 (JP)
(74) Representative: Grünecker Patent- und Rechtsanwälte PartG mbB
(86) International application number: PCT/JP2019/049113
(87) International publication number: WO 2020/170580

(57) **Abstract**

An electrochemical hydrogen pump includes an electrolyte membrane, an anode catalyst layer on one primary surface of the electrolyte membrane, a cathode catalyst layer on the other primary surface of the electrolyte membrane, an anode gas diffusion layer on the anode catalyst layer, an anode separator on the anode gas diffusion layer, and a voltage applicator that applies a voltage between the anode catalyst layer and the cathode catalyst layer. Application of the voltage by the voltage applicator causes hydrogen in a hydrogen-containing gas supplied to above the anode catalyst layer to move above the cathode catalyst layer and to be pressurized. The anode gas diffusion layer includes a porous carbon sheet that contains carbon fibers and a carbon material different from the carbon fibers and that has a larger porosity in a first surface layer, which is on the anode separator side, than in a second surface layer, which is on the anode catalyst layer side.

## Description

### Technical Field

The present disclosure relates to an electrochemical hydrogen pump.

### Background Art

Hydrogen has been attracting attention in recent years as a clean alternative energy source to replace fossil fuels against a background of environmental problems, such as global warming, and energy issues, such as the depletion of petroleum resources. When burnt, basically, hydrogen only releases water, with zero emissions of carbon dioxide, which causes global warming, and almost zero emissions of substances like nitrogen oxides, and this is why it is hoped that hydrogen will serve as clean energy. An example of a device that efficiently uses hydrogen as a fuel is fuel cells. The development and popularization of fuel cells are ongoing for automotive power supply and household power generation applications.

In the forthcoming hydrogen society, technologies will need to be developed to enable not only the production but also high-density storage and small-volume, low-cost transport or use of hydrogen. In particular, further popularization of fuel cells, which provide distributed energy sources, requires preparing infrastructure for the supply of hydrogen. In addition, attempts at producing, purifying, and densely storing high-purity hydrogen are ongoing to ensure stable supply of hydrogen.

For example, PTL 1 proposes a device for producing high-pressure hydrogen that includes a stack of a solid polymer electrolyte membrane, power feeders, and separators, end plates between which the stack is sandwiched, and fastening bolts that fasten the stack. In this device for producing high-pressure hydrogen, a differential pressure occurs between the cathode power feeder, which is on the high-pressure side, and the anode power feeder, which is on the low-pressure side, and if the differential pressure exceeds a particular pressure, it causes a deformation of the solid polymer electrolyte membrane and the low-pressure anode power feeder. The deformation leads to increased contact resistance between the high-pressure cathode power feeder and the solid polymer electrolyte membrane. To address this, the device for producing high-pressure hydrogen in PTL 1 has a pressing element, such as a disk spring or coil spring, so that even if the solid polymer electrolyte film and the low-pressure anode power feeder deform, the high-pressure cathode power feeder is pressed and brought into tight contact with the solid polymer electrolyte membrane. This helps limit the increase in contact resistance between the high-pressure cathode power feeder and the solid polymer electrolyte membrane.

To take another example, PTL 2 discloses an anode power feeder whose base, made of sintered titanium powder, has been pressed to have a lower porosity at its surface. This helps improve the density and smoothness of the surface, and damage to the electrolyte membrane is reduced.

### Citation List

### Patent Literature

PTL 1: Japanese Unexamined Patent Application Publication No. 2006-70322
PTL 2: Japanese Unexamined Patent Application Publication No. 2012-180553

### Summary of Invention

An object of an aspect of the present disclosure is to provide, for example, an electrochemical hydrogen pump that can be less prone to water flooding at the anode gas diffusion layer than in the related art.

To achieve this object, an electrochemical hydrogen pump in an aspect of the present disclosure is a device that includes: an electrolyte membrane; an anode catalyst layer on one primary surface of the electrolyte membrane; a cathode catalyst layer on the other primary surface of the electrolyte membrane; an anode gas diffusion layer on the anode catalyst layer; an anode separator on the anode gas diffusion layer; and a voltage applicator that applies a voltage between the anode catalyst layer and the cathode catalyst layer. The electrochemical hydrogen pump is configured to, through application of the voltage by the voltage applicator, cause hydrogen in a hydrogen-containing gas supplied to above the anode catalyst layer to move above the cathode catalyst layer and to be pressurized, and the anode gas diffusion layer includes a porous carbon sheet that contains carbon fibers and a carbon material different from the carbon fibers and that has a larger porosity in a first surface layer, which is on an anode separator side, than in a second surface layer, which is on an anode catalyst layer side.

The electrochemical hydrogen pump in an aspect of the present disclosure can advantageously be less prone to water flooding at its anode gas diffusion layer than in the related art.

### Brief Description of Drawings

[Fig. 1A] Fig. 1A is a diagram illustrating an example of an electrochemical hydrogen pump in Embodiment 1.
[Fig. 1B] Fig. 1B is an enlarged view of portion B of the electrochemical hydrogen pump in Fig. 1A.
[Fig. 2A] Fig. 2A is a diagram illustrating an example of an electrochemical hydrogen pump in Embodiment 1.
[Fig. 2B] Fig. 2B is an enlarged view of portion B of the electrochemical hydrogen pump in Fig. 2A.
[Fig. 3] Fig. 3 is a diagram illustrating an example of a porous carbon sheet in an electrochemical hydrogen pump in Embodiment 1.
[Fig. 4A] Fig. 4A is an image that represents an example of an SEM cross-sectional observation of a porous carbon sheet in an electrochemical hydrogen pump in Embodiment 1.
[Fig. 4B] Fig. 4B is an image that represents an example of an SEM cross-sectional observation of a porous carbon sheet in an electrochemical hydrogen pump in Embodiment 1.
[Fig. 4C] Fig. 4C is an image that represents an example of an SEM cross-sectional observation of a porous carbon sheet in an electrochemical hydrogen pump in Embodiment 1.
[Fig. 5] Fig. 5 is a diagram illustrating an example of a porous carbon sheet in an electrochemical hydrogen pump in Embodiment 2.
[Fig. 6A] Fig. 6A is a diagram illustrating an example of a porous carbon sheet in an electrochemical hydrogen pump in Embodiment 3.
[Fig. 6B] Fig. 6B is a diagram illustrating an example of a porous carbon sheet in an electrochemical hydrogen pump in a variation of Embodiment 3.

### Description of Embodiments

PTL 1 and 2 do not discuss the issue of the closure of flow channels (hereinafter flooding) by water at power feeders made of porous material.

Here, when an electric current flows between an anode and a cathode in an electrochemical hydrogen pump, for example, protons move from the anode to the cathode through an electrolyte membrane, accompanying water. If the operating temperature of the electrochemical hydrogen pump is equal to or higher than a particular temperature, the water that has moved from the anode to the cathode (electroosmotic water) is present as steam. However, as the hydrogen gas pressure at the cathode becomes higher, the percentage of liquid water increases. If liquid water is present in a cathode, part of the liquid water is pushed back to the anode because of a differential pressure between the cathode and the anode. The amount of water pushed back to the anode increases with rising hydrogen gas pressure at the cathode, which means flooding becomes more likely to occur at an anode gas diffusion layer of the anode as the hydrogen gas pressure at the cathode increases. Once such an event of flooding interferes with gas diffusion at an anode, the electrochemical hydrogen pump can be less efficient in pressurizing hydrogen because of increased diffusion resistance of the electrochemical hydrogen pump.

As a solution to this, an electrochemical hydrogen pump in a first aspect of the present disclosure is a device that includes: an electrolyte membrane; an anode catalyst layer on one primary surface of the electrolyte membrane; a cathode catalyst layer on the other primary surface of the electrolyte membrane; an anode gas diffusion layer on the anode catalyst layer; an anode separator on the anode gas diffusion layer; and a voltage applicator that applies a voltage between the anode catalyst layer and the cathode catalyst layer. The electrochemical hydrogen pump is configured to, through application of the voltage by the voltage applicator, cause hydrogen in a hydrogen-containing gas supplied to above the anode catalyst layer to move above the cathode catalyst layer and to be pressurized, and the anode gas diffusion layer includes a porous carbon sheet that contains carbon fibers and a carbon material different from the carbon fibers and that has a larger porosity in a first surface layer, which is on an anode separator side, than in a second surface layer, which is on an anode catalyst layer side.

An electrochemical hydrogen pump in a second aspect of the present disclosure is, for example: in the electrochemical hydrogen pump in the first aspect, the porous carbon sheet may have a lower carbon density in the first surface layer than in the second surface layer.

In this configuration, the electrochemical hydrogen pump in this aspect can be less prone to water flooding at its anode gas diffusion layer than in the related art.

Specifically, the porous carbon sheet has a larger porosity in its first surface layer, which is on the anode separator side, and this ensures water present inside the porous carbon sheet is easily drained from the porous carbon sheet, for example on a stream of hydrogen-containing gas through the porous carbon sheet. Besides this, the porous carbon sheet has a smaller porosity in its second surface layer, which is on the anode catalyst layer side, and this helps limit water penetration through the second surface layer even if water is pushed back to the anode because of a differential pressure between the cathode and the anode.

The electrochemical hydrogen pump in this aspect, therefore, is not prone to water flooding at the anode gas diffusion layer and, as a result, maintains adequate gas diffusion at the anode.

An electrochemical hydrogen pump in a third aspect of the present disclosure is: in the electrochemical hydrogen pump in the first or second aspect, the porous carbon sheet may have a lower density of the carbon material in the first surface layer than in the second surface layer.

In such a configuration, the electrochemical hydrogen pump in this aspect allows the manufacturer to ensure a proper relationship between, or proper relative magnitudes of, the porosity of the first surface layer and that of the second surface layer in the porous carbon sheet by varying density of the carbon material in the porous carbon sheet.

An electrochemical hydrogen pump in a fourth aspect of the present disclosure is: in the electrochemical hydrogen pump in any one of the first to third aspects, the carbon material in the porous carbon sheet may be a carbonized thermosetting resin.

A thermosetting resin is a polymer material that polymerizes upon heating, and is a resin that is irreversibly hardened. If so, the carbon material in the porous carbon sheet can be a carbonized thermosetting resin. Firing a carbon fiber sheet impregnated with a thermosetting resin, for example, gives a rigid, highly electroconductive, and superior-in-gas-diffusion porous carbon sheet that contains carbon fibers and a carbonized thermosetting resin.

An electrochemical hydrogen pump in a fifth aspect of the present disclosure is: in the electrochemical hydrogen pump in any one of the first to fourth aspects, the porous carbon sheet may have a lower density of carbon fibers in the first surface layer than in the second surface layer.

In such a configuration, the electrochemical hydrogen pump in this aspect allows the manufacturer to ensure a proper relationship between, or proper relative magnitudes of, the porosity of the first surface layer and that of the second surface layer in the porous carbon sheet by varying density of carbon fibers in the porous carbon sheet.

An electrochemical hydrogen pump in a sixth aspect of the present disclosure is: in the electrochemical hydrogen pump in any one of the first to fifth aspects, the porous carbon sheet may have a flow channel for the hydrogen-containing gas in the first surface layer.

In such a configuration, the electrochemical hydrogen pump in this aspect contains a flow channel in the first surface layer, which is on the anode separator side, of the porous carbon sheet, and this ensures water present inside the flow channel is easily drained from the porous carbon sheet, for example on a stream of hydrogen-containing gas through the porous carbon sheet. By virtue of this, the electrochemical hydrogen pump in this aspect is not prone to water flooding at the anode gas diffusion layer and, as a result, maintains adequate gas diffusion at the anode.

The electrochemical hydrogen pump in this aspect, moreover, allows the manufacture to create a flow channel for the hydrogen-containing gas with ease, for example by die shaping, in the first surface layer, which is on the anode separator side, of the porous carbon sheet. The electrochemical hydrogen pump in this aspect therefore enables easier creation of a flow channel, for example in comparison with the case in which a metal anode separator is cut to create a flow channel for the hydrogen-containing gas.

An electrochemical hydrogen pump in a seventh aspect of the present disclosure is: in the electrochemical hydrogen pump in any one of the first to sixth aspects, the porous carbon sheet may contain a water-repellent layer in the second surface layer. An electrochemical hydrogen pump in an eighth aspect of the present disclosure is: in the electrochemical hydrogen pump in any one of the first to sixth aspects, the porous carbon sheet may have a water-repellent layer on the second surface layer.

In such a configuration, the electrochemical hydrogen pump in this aspect contains a porous carbon sheet that is water-repellent by virtue of the water-repellent layer included in or disposed on its second surface layer, which is on the anode catalyst layer side. Thus, even if water is pushed back to the anode because of a differential pressure between the cathode and the anode, the water is drained quickly on a stream of the hydrogen-containing gas at the water-repellent layer. The electrochemical hydrogen pump in this aspect is therefore not prone to water flooding at the anode gas diffusion layer and, as a result, maintains adequate gas diffusion at the anode.

An electrochemical hydrogen pump in a ninth aspect of the present disclosure is: in the electrochemical hydrogen pump in the seventh or eighth aspect, the water-repellent layer may be one that contains a water-repellent resin and carbon black.

In such a configuration, the electrochemical hydrogen pump in this aspect ensures, by virtue of the presence of a water-repellent resin and carbon black in the water-repellent layer, the anode gas diffusion layer exhibits adequate water repellency.

The following describes embodiments of the present disclosure with reference to the attached drawings. It should be noted that all embodiments are merely illustrations of the above aspects. Information such as shapes, materials, structural elements, and the positions of and connections between the elements is therefore given for illustrative purposes only and is not intended to limit the above aspects unless it is given in a claim. Those elements that are not recited in the independent claims, which represent the most generic concepts of the above aspects, are described as optional. An element may appear in drawings with the same reference sign without repeated description. The drawings illustrate structural elements schematically to help understand and therefore may be inaccurate, for example in shape and relative dimensions.

### (Embodiment 1)

### [Device Configuration]

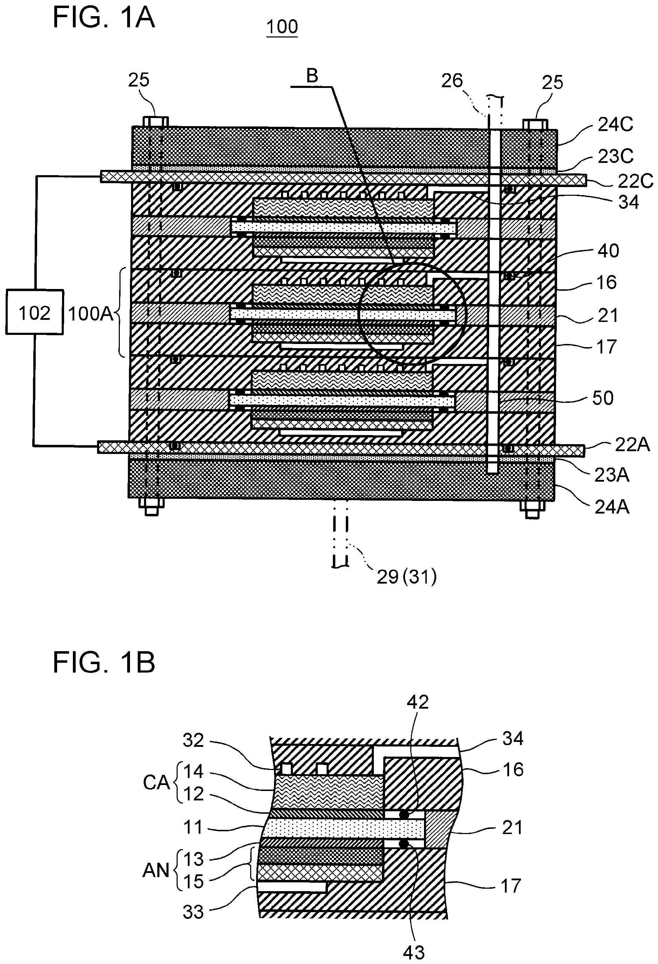

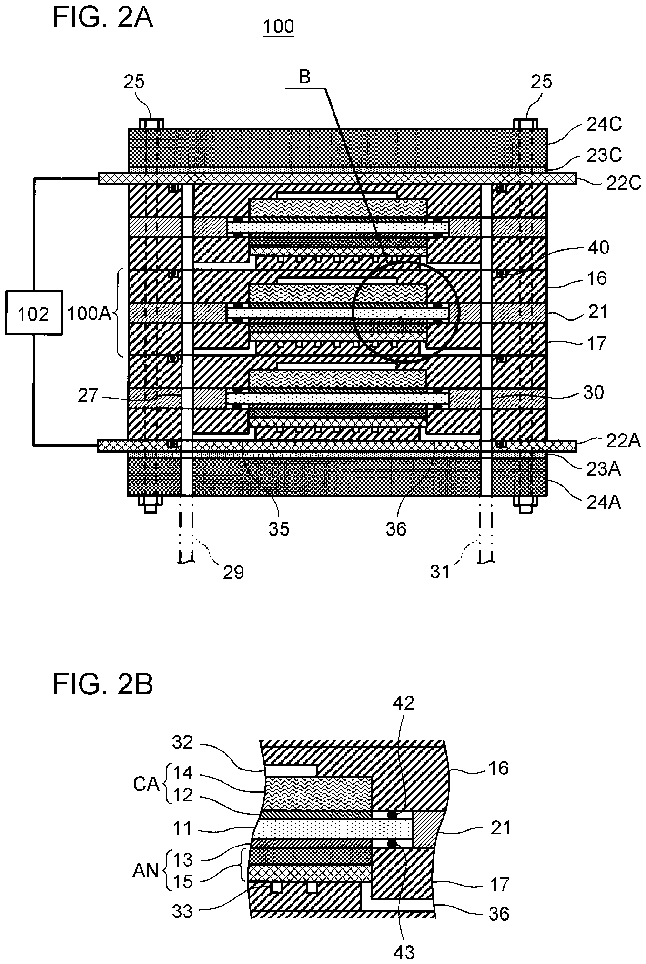

Figs. 1A and 2A are diagrams illustrating an example of an electrochemical hydrogen pump in Embodiment 1. Fig. 1B is an enlarged view of portion B of the electrochemical hydrogen pump in Fig. 1A. Fig. 2B is an enlarged view of portion B of the electrochemical hydrogen pump in Fig. 2A.

Fig. 1A illustrates a vertical section of the electrochemical pump 100 that includes a straight line passing through the center of the electrochemical hydrogen pump 100 and the center of a cathode gas outlet manifold 50 in plan view. Fig. 2A illustrates a vertical section of the electrochemical hydrogen pump 100 that includes a straight line passing through the center of the electrochemical hydrogen pump 100, the center of an anode gas inlet manifold 27, and the center of an anode gas outlet manifold 30 in plan view.

In the example illustrated in Figs. 1A and 2A, the electrochemical hydrogen pump 100 includes at least one hydrogen pump unit 100A.

The electrochemical hydrogen pump 100 contains multiple hydrogen pump units 100A stacked together. For example, in Figs. 1A and 2A, there is a three-tier stack of hydrogen pump units 100A. The number of hydrogen pump units 100A, however, is not critical. The number of hydrogen pump units 100A can be selected as appropriate on the basis of operating conditions, such as the volume of hydrogen to be pressurized by the electrochemical hydrogen pump 100.

A hydrogen pump unit 100A includes an electrolyte membrane 11, an anode AN, a cathode CA, a cathode separator 16, an anode separator 17, and an insulator 21. In a hydrogen pump unit 100A, an electrolyte membrane 11, an anode catalyst layer 13, a cathode catalyst layer 12, an anode gas diffusion layer 15, a cathode gas diffusion layer 14, an anode separator 17, and a cathode separator 16 are stacked together.

The anode AN is on one primary surface of the electrolyte membrane 11. The anode AN is an electrode that includes an anode catalyst layer 13 and an anode gas diffusion layer 15. In plan view, a ring-shaped sealing element 43 surrounds the anode catalyst layer 13. The anode catalyst layer 13 has been sealed properly with the sealing element 43.

The cathode CA is on the other primary surface of the electrolyte membrane 11. The cathode CA is an electrode that includes a cathode catalyst layer 12 and a cathode gas diffusion layer 14. In plan view, a ring-shaped sealing element 42 surrounds the cathode catalyst layer 12. The cathode catalyst layer 12 is sealed properly with the sealing element 42.

The electrolyte membrane 11 is therefore sandwiched between the anode AN and the cathode CA, touching each of the anode catalyst layer 13 and cathode catalyst layer 12. The stack of the cathode CA, electrolyte membrane 11, and anode AN is referred to as a membrane electrode assembly (hereinafter MEA).

The electrolyte membrane 11 conducts protons. The electrolyte membrane 11 can be of any type as long as it conducts protons. Examples of membranes that can be used as the electrolyte membrane 11 include, but are not limited to, a fluoropolymer electrolyte membrane and a hydrocarbon polymer electrolyte membrane. Specifically, the electrolyte membrane 11 can be of, for example, Nafion® (DuPont) or Aciplex® (Asahi Kasei Corporation).

The anode catalyst layer 13 is on one primary surface of the electrolyte membrane 11. The anode catalyst layer 13 contains platinum as a catalyst metal for example, but this is not the only possible choice.

The cathode catalyst layer 12 is on the other primary surface of the electrolyte membrane 11. The cathode catalyst layer 12 contains platinum as a catalyst metal for example, but this is not the only possible choice.

Examples of catalyst carriers that can be used in the cathode catalyst layer 12 and anode catalyst layer 13 include, but are not limited to, carbon particles, for example of carbon black or graphite, and electrically conductive oxide particles.

In the cathode catalyst layer 12 and anode catalyst layer 13, fine particles of catalyst metal are held on a catalyst carrier in a highly dispersed state. Usually, these cathode catalyst layer 12 and anode catalyst layer 13 contain a proton-conductive ionomer component added to expand the field for the electrode reaction.

The cathode gas diffusion layer 14 is on the cathode catalyst layer 12. The cathode gas diffusion layer 14, made of porous material, is electrically conductive, and gases can diffuse therethrough. Desirably, the cathode gas diffusion layer 14 is elastic enough that it will properly follow the displacement and deformation of the structural elements of the electrochemical hydrogen pump 100 caused by a differential pressure between the cathode CA and the anode AN while the pump is operating to pressurize hydrogen.

Here, in the electrochemical hydrogen pump 100 in this embodiment, the cathode gas diffusion layer 14 is contained in a recess in the cathode separator 16, but before the hydrogen pump units 100A are fastened together using fasteners 25, it is sticking out of the recess in the direction of thickness, although not illustrated. Upon the fastening together of the hydrogen pump units 100A with fasteners 25, therefore, the thickness of the cathode gas diffusion layer 14 undergoes compressive deformation in accordance with the thickness of the portion sticking out of the recess. The reason is as follows.

While an electrochemical hydrogen pump 100 is operating to pressurize hydrogen, the anode gas diffusion layer 15, anode catalyst layer 13, and electrolyte membrane 11 are placed under high pressure because of a differential pressure between the cathode CA and the anode AN, resulting in compressive deformation of the anode gas diffusion layer 15, anode catalyst layer 13, and electrolyte membrane 11. In the electrochemical hydrogen pump 100 in this embodiment, however, the cathode gas diffusion layer 14 elastically deforms to regain its thickness before compression by the fasteners 25 from its thickness after the compression, following the deformation of the anode gas diffusion layer 15, anode catalyst layer 13, and electrolyte membrane 11. This helps maintain adequate contact between the cathode catalyst layer 12 and the cathode gas diffusion layer 14.

The cathode gas diffusion layer 14 is an element made of carbon fiber. For example, it may be a porous carbon fiber sheet, for example of carbon paper, carbon cloth, or carbon felt. The base material for the cathode gas diffusion layer 14 does not need to be a carbon fiber sheet. For example, the base material for the cathode gas diffusion layer 14 may be sintered metal fibers, for example made from titanium, a titanium alloy, or stainless steel, sintered metal particles made from any such metal, etc.

The anode gas diffusion layer 15 is on the anode catalyst layer 13. The anode gas diffusion layer 15, made of porous material, is electrically conductive, and gases can diffuse therethrough. Desirably, the anode gas diffusion layer 15 is of high rigidity so that it will limit the displacement and deformation of the structural elements of the electrochemical hydrogen pump 100 caused by a differential pressure between the cathode CA and the anode AN while the pump is operating to pressurize hydrogen.

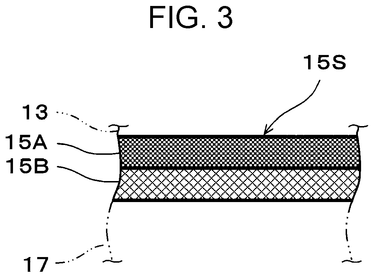

Here, Fig. 3 is a diagram illustrating an example of a porous carbon sheet in an electrochemical hydrogen pump in Embodiment 1.

The anode gas diffusion layer 15 includes a porous carbon sheet 15S that contains carbon fibers and a carbon material different from the carbon materials and that has a larger porosity in a first surface layer 15B, which is on the anode separator 17 side, than in a second surface layer 15A, which is on the anode catalyst layer 13 side. Such a porous carbon sheet 15S may have, for example, a lower carbon density in the first surface layer 15B than in the second surface layer 15A.

The carbon material in the porous carbon sheet 15S, moreover, may be a carbonized thermosetting resin. In that case, the porous carbon sheet 15S may be, for example, a fired sheet of a thermosetting resin and carbon fibers. Specifically, a thermosetting resin is a polymer material that polymerizes upon heating, and is a resin that is irreversibly hardened. Thus, firing a carbon fiber sheet impregnated with a thermosetting resin, for example, gives a rigid, highly electroconductive, and superior-in-gas-diffusion porous carbon sheet 15S that contains carbon fibers and a carbonized thermosetting resin. Further details will be given later.

Here, the manufacturer can ensure a proper relationship between, or proper relative magnitudes of, the porosity of the first surface layer 15B and that of the second surface layer 15A in the porous carbon sheet 15S as described above by, for example, varying density of carbon fibers in the porous carbon sheet 15S. That is, the porous carbon sheet 15S in this case has a lower density of carbon fibers in the first surface layer 15B than in the second surface layer 15A. This ensures the porosity in the first surface layer 15B is larger than that in the second surface layer 15A.

Alternatively, the manufacturer can ensure a proper relationship between, or proper relative magnitudes of, the porosity of the first surface layer 15B and that of the second surface layer 15A in the porous carbon sheet 15S as described above by, for example, varying density of the carbon material in the porous carbon sheet 15S. That is, the porous carbon sheet 15S in this case has a lower density of the carbon material in the first surface layer 15B than in the second surface layer 15A. Specifically, if the porous carbon sheet 15S is, for example, a fired form of a carbon fiber sheet impregnated with a thermosetting resin, the density of the carbon material after firing increases with increasing amount of the thermosetting resin in the carbon fiber sheet before firing. That is, the porous carbon sheet 15S in this case contains, before firing, less of the thermosetting resin in the first surface layer 15B than in the second surface layer 15A.

The thermosetting resin in the foregoing can be, for example, but is not limited to, a phenolic resin.

The pore diameters and porosities in the porous carbon sheet 15S can be determined using, for example, a mercury porosimeter (trade name, AutoPore III 9410; Shimadzu Corporation), but this is not the only possible choice. This mercury porosimeter measures the volume of pores having a diameter of several nm to approximately 500 µm on the basis of pressure intrusion of mercury into the pores. The pore volume and the solid portion in each of the first surface layer 15B and second surface layer 15A provide knowledge of the porosities in these layers.

In the electrochemical hydrogen pump 100 in this embodiment, furthermore, the porous carbon sheet 15S may be a stack in which, as illustrated in Fig. 3, one primary surface of the first layer 15B is in contact with a primary surface of the anode separator 17, and the other primary surface of the first surface layer 15B is in contact with one primary surface of the second surface layer 15A. As illustrated in Fig. 3, the other primary surface of the second surface layer 15A may be in contact with the anode catalyst layer 13.

It should be noted that the porous carbon sheet 15S in Fig. 3 may be made with a single carbon fiber sheet or may be made with multiple carbon fiber sheets.

In the former case, the porous carbon sheet 15S can be obtained by impregnating only one side of a carbon fiber sheet with a thermosetting resin before firing.

In the latter case, the porous carbon sheet 15S can be obtained by stacking two carbon fiber sheets impregnated with different amounts of thermosetting resin before firing. The number of carbon fiber sheets stacked together may be three or more. For example, there may be an intermediate layer (not illustrated), between the carbon fiber sheet corresponding to the first surface layer 15B and that corresponding to the second surface layer 15A, that includes a fired form of a carbon fiber sheet impregnated with a thermosetting resin and in which the porosity is smaller than in the first surface layer 15B and larger than in the second surface layer 15A.

Next, an example of an SEM cross-sectional observation of a porous carbon sheet 15S in an electrochemical hydrogen pump 100 in Embodiment 1 is described with reference to drawings.

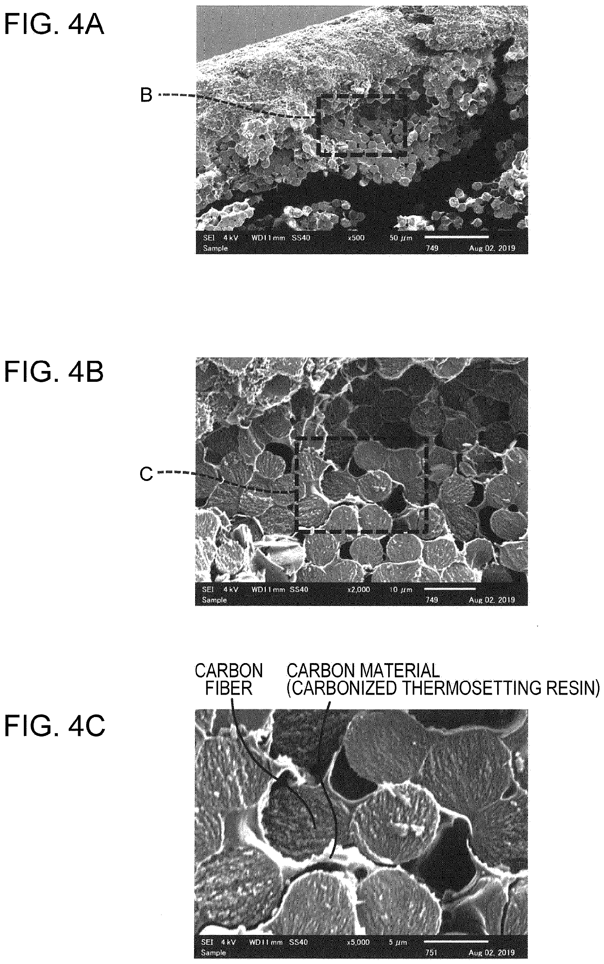

Figs. 4A, 4B, and 4C are images that represent an example of an SEM cross-sectional observation of a porous carbon sheet in an electrochemical hydrogen pump in Embodiment 1.

Fig. 4A is a partial image of a cross-section of the porous carbon sheet 15S observed at a magnification of 500 times. Fig. 4B is an enlarged view (2000 times) of portion B in Fig. 4A. Fig. 4C is an enlarged view (5000 times) of portion C in Fig. 4B.

The cross-sectional observations by SEM were made with an electronic gun set as follows.
- Acceleration voltage: 4 kV
- Emission current: SS 40

The porous carbon sheet 15S was Tokai Carbon Co., Ltd.'s carbon fiber sheet containing carbon fibers and a carbon material (carbonized phenolic thermosetting resin) (trade name: TOKAREFLEX).

As shown in Fig. 4C, carbonized thermosetting resin (light areas in the image) was observed in spaces between carbon fibers (dark areas in the image). That is, such a carbonized substance fills spaces between carbon fibers, and this is why the porosity of a carbon fiber sheet can be adjusted to a desired level by impregnating the carbon fiber sheet with an appropriate amount of thermosetting resin before firing.

Incidentally, the light areas in the uppermost layer in Fig. 4A, seen above portion B, are damaged portions of carbon fibers produced when carbon fibers extending in directions different than those in portion B were cut. The cavity seen below portion B in Fig. 4A (dark area in the image) is a crack in carbon fibers produced when the carbon fibers were cut.

The anode separator 17 is an element disposed on the anode AN. The cathode separator 16 is an element disposed on the cathode CA. The cathode separator 16 and anode separator 17 each have a recess in their middle. Each of these recesses contains the cathode gas diffusion layer 14 and anode gas diffusion layer 15, respectively.

In such a way, an MEA as described above is sandwiched between a cathode separator 16 and an anode separator 17, forming a hydrogen pump unit 100A.

The cathode separator 16 has a cathode gas flow channel 32, for example a serpentine one that includes multiple U-shaped turns and multiple straight stretches in plan view, in its primary surface touching the cathode gas diffusion layer 14. The straight stretches of the cathode gas flow channel 32 extend perpendicular to the plane of the page of Fig. 1A. Such a cathode gas flow channel 32, however, is merely an example and is not the only possible choice. For example, the cathode gas flow channel may be formed by multiple linear passages.

The anode separator 17 has an anode gas flow channel 33, for example a serpentine one that includes multiple U-shaped turns and multiple straight stretches in plan view, in its primary surface touching the anode gas diffusion layer 15. The straight stretches of the anode gas flow channel 33 extend perpendicular to the plane of the page of Fig. 2A. Such an anode gas flow channel 33, however, is merely an example and is not the only possible choice. For example, the anode gas flow channel may be formed by multiple linear passages.

Between the electrically conductive cathode separator 16 and anode separator 17 is a ring-shaped flat-plate insulator 21 surrounding the MEA. This prevents short-circuiting between the cathode separator 16 and the anode separator 17.

Here, the electrochemical hydrogen pump 100 includes first and second end plates, which are at the ends, in the direction of stacking, of the stack of hydrogen pump units 100A. Fasteners 25 are also included, fastening the hydrogen pump units 100A, first end plate, and second end plate together in the direction of stacking.

In the example illustrated in Figs. 1A and 2A, the cathode end plate 24C and anode end plate 24A each correspond to each of the first and second end plates. That is, the anode end plate 24A is an end plate disposed on the anode separator 17 located at a first end in the direction of stacking of the components of the hydrogen pump units 100A. The cathode end plate 24C is an end plate disposed on the cathode separator 16 located at a second end in the direction of stacking of the components of the hydrogen pump units 100A.

The fasteners 25 can be of any type as long as they can fasten the hydrogen pump units 100A, cathode end plate 24C, and anode end plate 24A together in the direction of stacking.

For example, the fasteners 25 can be bolts and nuts with a disk spring or a similar tool.

In that case, the bolts as a component of the fasteners 25 may be made to penetrate only through the anode end plate 24A and cathode end plate 24C. In the electrochemical hydrogen pump 100 in this embodiment, however, the bolts penetrate through the components of the three-tier stack of hydrogen pump units 100A, a cathode feed plate 22C, a cathode insulating plate 23C, an anode feed plate 22A, an anode insulating plate 23A, the anode end plate 24A, and the cathode end plate 24C. In this state, the hydrogen pump units 100A are under a desired fastening pressure applied by the fasteners 25, with an end face of the cathode separator 16 at the second end in the aforementioned direction of stacking and an end face of the anode separator 17 at the first end in the aforementioned direction of stacking each sandwiched between each of the cathode end plate 24C and anode end plate 24A with each of the cathode feed plate 22C, cathode insulating plate 23C, anode feed plate 22A, and anode insulating plate 23A interposed therebetween.

In the electrochemical hydrogen pump 100 in this embodiment, therefore, the three-tier stack of hydrogen pump units 100A is maintained in its proper stacked state in the aforementioned direction of stacking by virtue of the fastening pressure applied by the fasteners 25. Furthermore, since the bolts as a component of the fasteners 25 penetrate through the components of the electrochemical hydrogen pump 100, in-plane movement of these components is restricted adequately.

Here, in the electrochemical hydrogen pump 100 in this embodiment, cathode gas flow channels 32 communicate with each other as passages through which cathode gas (hydrogen) coming out of the cathode gas diffusion layer 14 of each hydrogen pump unit 100A flows. The following describes how the cathode gas flow channels 32 communicate with each other with reference to drawings.

First, as illustrated in Fig. 1A, the cathode gas outlet manifold 50 has been built as a combination of through holes created through the components of the three-tier stack of hydrogen pump units 100A and the cathode end plate 24C and a blind hole in the anode end plate 24A. The cathode end plate 24C also has a cathode gas outlet line 26. The cathode gas outlet line 26 may be a pipe through which hydrogen (H₂) discharged from the cathode CA flows. The cathode gas outlet line 26 communicates with the cathode gas outlet manifold 50.

The cathode gas outlet manifold 50, furthermore, communicates with one end of the cathode gas flow channel 32 of each hydrogen pump unit 100A via each of cathode gas conduits 34. This ensures streams of hydrogen that have passed through the cathode gas flow channel 32 and cathode gas conduit 34 of the hydrogen pump units 100A join together at the cathode gas outlet manifold 50. The combined stream of hydrogen is then guided to the cathode gas outlet line 26.

In such a way, the cathode gas flow channel 32 of each hydrogen pump unit 100A communicates with the others via the cathode gas conduit 34 of each hydrogen pump unit 100A and the cathode gas outlet manifold 50.

Between a cathode separator 16 and an anode separator 17, between a cathode separator 16 and the cathode feed plate 22C, and between an anode separator 17 and the anode feed plate 22A are ring-shaped sealing elements 40, such as O-rings, surrounding the cathode gas outlet manifold 50 in plan view. The cathode gas outlet manifold 50 has been sealed properly with these sealing elements 40.

As illustrated in Fig. 2A, the anode end plate 24A has an anode gas inlet line 29. The anode gas inlet line 29 may be a pipe through which anode gas to be supplied to the anode AN flows. An example of such an anode gas is hydrogen-containing gases including steam. The anode gas inlet line 29 communicates with a tubular anode gas inlet manifold 27. The anode gas inlet manifold 27 has been built as a combination of through holes created through the components of the three-tier stack of hydrogen pump units 100A and the anode end plate 24A.

The anode gas inlet manifold 27, furthermore, communicates with a first end of the anode gas flow channel 33 of each hydrogen pump unit 100A via each of first anode gas conduits 35. This ensures anode gas supplied from the anode gas inlet line 29 to the anode gas inlet manifold 27 is distributed to each hydrogen pump unit 100A through the first anode gas conduit 35 of each hydrogen pump unit 100A. While the distributed anode gas passes through the anode gas flow channel 33, the anode gas is supplied from the anode gas diffusion layer 15 to the anode catalyst layer 13.

As illustrated in Fig. 2A, the anode end plate 24A also has an anode gas outlet line 31. The anode gas outlet line 31 may be a pipe through which anode gas discharged from the anode AN flows. The anode gas outlet line 31 communicates with a tubular anode gas outlet manifold 30. The anode gas outlet manifold 30 has been built as a combination of through holes created through the components of the three-tier stack of hydrogen pump units 100A and the anode end plate 24A.

The anode gas outlet manifold 30, furthermore, communicates with a second end of the anode gas flow channel 33 of each hydrogen pump unit 100A via each of second anode gas conduits 36. This ensures streams of anode gas that have passed through the anode gas flow channel 33 of the hydrogen pump units 100A are supplied to the anode gas outlet manifold 30 through each second anode gas conduit 36 and join together there. The combined stream of anode gas is then guided to the anode gas outlet line 31.

Between a cathode separator 16 and an anode separator 17, between a cathode separator 16 and the cathode feed plate 22C, and between an anode separator 17 and the anode feed plate 22A are ring-shaped sealing elements 40, such as O-rings, surrounding the anode gas inlet manifold 27 and anode gas outlet manifold 30 in plan view. The anode gas inlet manifold 27 and anode gas outlet manifold 30 have been sealed properly with the sealing elements 40.

As illustrated in Figs. 1A and 2A, the electrochemical hydrogen pump 100 includes a voltage applicator 102.

The voltage applicator 102 is a device that applies a voltage between the anode catalyst layer 13 and the cathode catalyst layer 12. That is, the electrochemical hydrogen pump 100 is a device that operates through the application of the voltage by the voltage applicator 102, which causes hydrogen in a hydrogen-containing gas supplied to above the anode catalyst layer 13 to move above the cathode catalyst layer 12 and to be pressurized.

Specifically, the high potential of the voltage applicator 102 has been applied to the anode catalyst layer 13, and the low potential of the voltage applicator 102 has been applied to the cathode catalyst layer 12. The voltage applicator 102 can be of any type as long as it can apply a voltage between the anode catalyst layer 13 and the cathode catalyst layer 12. For example, the voltage applicator 102 may be a device that controls a voltage to be applied between the anode catalyst layer 13 and the cathode catalyst layer 12. In that case, the voltage applicator 102 includes a DC-to-DC converter if it is connected to a direct-current power supply, such as a battery, a solar cell, or a fuel cell, or includes an AC-to-DC converter if it is connected to an alternating-current power supply, such as mains electricity.

Alternatively, the voltage applicator 102 may be, for example, a multi-range power supply, which controls the voltage it applies between the anode catalyst layer 13 and the cathode catalyst layer 12 and also controls the current to flow between the anode catalyst layer 13 and the cathode catalyst layer 12 so that a preset amount of electricity will be supplied to the hydrogen pump units 100A.

In the example illustrated in Figs. 1A and 2A, the low-potential terminal of the voltage applicator 102 is connected to the cathode feed plate 22C, and the high-potential terminal of the voltage applicator 102 is connected to the anode feed plate 22A. The cathode feed plate 22C is in electrical contact with the cathode separator 16 at the second end in the aforementioned direction of stacking, and the anode feed plate 22A is in electrical contact with the anode separator 17 at the first end in the aforementioned direction of stacking.

Although not illustrated, it is also possible to build a hydrogen supply system that includes this electrochemical hydrogen pump 100. Such a hydrogen supply system is equipped as necessary to supply hydrogen.

For example, the hydrogen supply system may include a dew-point controller (e.g., a humidifier) that controls the dew point of the mixture of hydrogen-containing anode gas discharged from the anode AN through the anode gas outlet line 31, which has been heavily humidified, and hydrogen-containing anode gas supplied from an external hydrogen source through the anode gas inlet line 29, which has been only slightly humidified. In that case, the hydrogen-containing anode gas from an external hydrogen source may be produced using, for example, a water electrolyzer.

Furthermore, the hydrogen supply system may include, for example, a temperature sensor that detects the temperature of the electrochemical hydrogen pump 100, a hydrogen reservoir that provides a temporary storage for hydrogen discharged from the cathodes CA in the electrochemical hydrogen pump 100, and a pressure sensor that detects the pressure of hydrogen gas in the hydrogen reservoir.

It should be understood that the above-described configuration of an electrochemical hydrogen pump 100 and various equipment, not illustrated, for a hydrogen supply system are merely examples and are not the only possible choices.

For example, the dead-end structure may be used, in which the anode gas outlet manifold 30 and anode gas outlet line 31 are omitted, and hydrogen in the anode gas supplied to the anode AN through the anode gas inlet manifold 27 is all pressurized at the cathode CA.

### [Operation]

The following describes an example of how the electrochemical hydrogen pump 100 pressurizes hydrogen with reference to drawings.

This operation may be performed through, for example, the reading of a control program in a memory of a controller, not illustrated, by a processor of the controller. This operation, however, does not always need to be done by a controller. Part of the operation may be performed by the operator. The following describes a case in which the anode gas to be supplied to the anodes AN in the electrochemical hydrogen pump 100 is hydrogen-containing gases including steam.

First, the anodes AN in the electrochemical hydrogen pump 100 are supplied with low-pressure hydrogen-containing gases, and a voltage from the voltage applicator 102 is fed to the electrochemical hydrogen pump 100.

This causes hydrogen molecules to dissociate into hydrogen ions (protons) and electrons through oxidation (formula (1)) at the anode catalyst layer 13 of the anode AN. The protons travel through the inside of the electrolyte membrane 11 to the cathode catalyst layer 12. The electrons travel through the voltage applicator 102 to the cathode catalyst layer 12.

At the cathode catalyst layer 12, hydrogen molecules are regenerated through reduction (formula (2)). As known, while the protons are traveling through the inside of the electrolyte membrane 11, a particular amount of water, called electroosmotic water, moves from the anode AN to the cathode CA together with the protons.

During this, the hydrogen (H₂) produced at the cathode CA can be pressurized by increasing the pressure drop in a hydrogen outlet line using a flow controller, not illustrated. The hydrogen outlet line can be, for example, the cathode gas outlet line 26 in Fig. 2A. The flow controller can be, for example, a back pressure valve or regulator valve fitted to the hydrogen outlet line.

Anode:

H₂ (low pressure) → 2H⁺ + 2e⁻ ... (1)

Cathode:

2H⁺ + 2e⁻ → H₂ (high pressure) ... (2)

In such a way, in the electrochemical hydrogen pump 100, the application of the aforementioned voltage by the voltage applicator 102 causes hydrogen in the hydrogen-containing gases supplied to the anode AN to be pressurized at the cathode CA. After this hydrogen pressurization operation of the electrochemical hydrogen pump 100, the hydrogen pressurized at the cathode CA is, for example, stored temporarily in a hydrogen reservoir, not illustrated. The hydrogen stored in the hydrogen reservoir is supplied to a hydrogen consumer when needed. The hydrogen consumer can be, for example, a fuel cell that generates electricity using hydrogen.

Here, when an electric current flows between an anode AN and a cathode CA in an electrochemical hydrogen pump 100, for example, protons move from the anode AN to the cathode CA through an electrolyte membrane 11, accompanying water. If the operating temperature of the electrochemical hydrogen pump 100 is equal to or higher than a particular temperature, the water that has moved from the anode AN to the cathode CA (electroosmotic water) is present as steam. However, as the hydrogen gas pressure at the cathode CA becomes higher, the percentage of liquid water increases. If liquid water is present in a cathode CA, part of the liquid water is pushed back to the anode AN because of a differential pressure between the cathode CA and the anode AN. The amount of water pushed back to the anode AN increases with rising hydrogen gas pressure at the cathode CA, which means flooding becomes more likely to occur at the anode gas diffusion layer 15 of the anode AN because of water pushed back to the anode AN as the hydrogen gas pressure at the cathode CA increases. Once such an event of flooding interferes with gas diffusion at an anode AN, the electrochemical hydrogen pump 100 can be less efficient in pressurizing hydrogen because of increased diffusion resistance of the electrochemical hydrogen pump 100.

As a solution to this, in the electrochemical hydrogen pump 100 in this embodiment, the anode gas diffusion layer 15 includes, as stated, a porous carbon sheet 15S that contains carbon fibers and a carbon material different from the carbon fibers and that has a larger porosity in a first surface layer 15B, which is on the anode separator 17 side, than in a second surface layer 15A, which is on the anode catalyst layer 13 side. By virtue of this, the electrochemical hydrogen pump 100 in this embodiment can be less prone to water flooding at its anode gas diffusion layer 15 than in the related art.

Specifically, the porous carbon sheet 15S has a larger porosity in its first surface layer 15B, which is on the anode separator 17 side, and this ensures water present inside the porous carbon sheet 15S is easily drained from the porous carbon sheet 15S, for example on a stream of hydrogen-containing gas through the porous carbon sheet 15S. Besides this, the porous carbon sheet 15S has a smaller porosity in its second surface layer 15A, which is on the anode catalyst layer 13 side, and this helps limit water penetration through the second surface layer 15A even if water is pushed back to the anode because of a differential pressure between the cathode CA and the anode AN.

The electrochemical hydrogen pump 100 in this embodiment, therefore, is not prone to water flooding at the anode gas diffusion layer 15 and, as a result, maintains adequate gas diffusion at the anode AN.

Here, in the electrochemical hydrogen pumps in PTL 1 and 2, the gas diffusion layers are made of a metallic material, such as titanium. Gas diffusion layers made of a metallic material need to be plated with a noble metal, such as platinum. The reason is as follows.

A metallic material, such as titanium, in a gas diffusion layer comes into contact with a proton-conductive electrolyte membrane with a catalyst layer therebetween. This electrolyte membrane (polymer film) tends to be made with pendant sulfuric acid groups to be conductive to protons. When a wet hydrogen-containing gas is supplied to the gas diffusion layer, therefore, the metallic material can touch strongly acidic water and, as a result, release metal ions in the water.

This means a gas diffusion layer made of a metallic material needs to be prevented from releasing metal ions in an acidic state. An example of a common measure is to form an electroconductive coating on the surface of the metallic material by plating the metallic material with a noble metal, which does not easily release ions in an acidic state, but this increases the cost of producing the electrochemical hydrogen pump. It is not desirable to form an oxide coating on the surface of the metallic material because it affects the electrical conductivity of the gas diffusion layer.

To prevent the release of metal ions from the gas diffusion layers in an acidic state, the inventors considered using carbon-based gas diffusion layers as they are resistant to corrosion under acidic conditions and cost less to produce, but found a problem therewith: The anode gas diffusion layer 15 buckles into the anode gas flow channel 33 in the anode separator 17 under the pressure at the cathode CA.

In light of such problems, the electrochemical hydrogen pump 100 in this embodiment uses a porous carbon sheet 15S a fired form of a carbon fiber sheet impregnated with a thermosetting resin. For example, it would be good to fire a carbon fiber sheet impregnated with a thermosetting resin beforehand in a reducing atmosphere, for example filled with nitrogen gas.

The electrochemical hydrogen pump 100 in this embodiment is therefore such that the firing and resulting carbonization of a thermosetting resin gives the porous carbon sheet 15S high rigidity as a result of mutual reinforcement between the carbon material and carbon fibers. This ensures the porous carbon sheet 15S deforms only to a limited extent even under the differential pressure that occurs between the cathode CA and the anode AN while the electrochemical hydrogen pump 100 is operating to pressurize hydrogen. For example, the electrochemical hydrogen pump 100 in this embodiment is at a reduced risk of the buckling of the porous carbon sheet 15S into the anode gas flow channel 33 in the anode separator 17 under such a differential pressure.

The electrochemical hydrogen pump 100 in this embodiment, moreover, is such that the firing and resulting carbonization of a thermosetting resin gives an electrical conductor of carbonized material. Since this electrical conductor and carbon fibers come into contact, the electrochemical hydrogen pump 100 in this embodiment has a highly electroconductive porous carbon sheet 15S.

Furthermore, the electrochemical hydrogen pump 100 in this embodiment is such that by virtue of the firing and resulting carbonization of a thermosetting resin, the porous carbon sheet 15S tends to have pores open to the outside (through holes) therein. This makes the porous carbon sheet 15S superior in gas diffusion therethrough.

Additionally, the electrochemical hydrogen pump 100 in this embodiment is such that by virtue of advance firing of a carbon fiber sheet impregnated with a thermosetting resin, organic components, derived from the thermosetting resin, present in the water in the hydrogen-containing gas have been reduced. That is, organic components dissolved in the water in the hydrogen-containing gas can become contaminants that affect, for example, the reactivity of the anode catalyst layer 13 and cathode catalyst layer 12 and the proton conductivity of the electrolyte membrane 11. The electrochemical hydrogen pump 100 in this embodiment, however, suffers less from such disadvantages by virtue of its configuration as described above.

### (Embodiment 2)

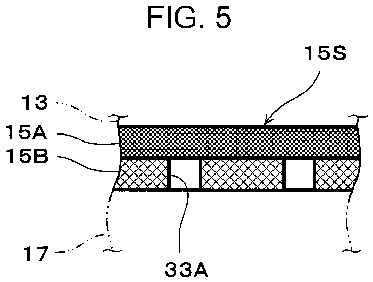

Fig. 5 is a diagram illustrating an example of a porous carbon sheet in an electrochemical hydrogen pump in Embodiment 2.

An electrochemical hydrogen pump 100 in this embodiment is the same as the electrochemical hydrogen pump 100 in Embodiment 1 except for the structure and production of the porous carbon sheet 15S and the structure of the anode separator 17.

In the electrochemical hydrogen pump 100 in this embodiment, the porous carbon sheet 15S has a flow channel 33A for a hydrogen-containing gas in its first surface layer 15B as illustrated in Fig. 5. In other words, the anode gas flow channel 33 in the anode separator 17 (see Figs. 1B and 2B) has been replaced with a flow channel 33A created in the first surface layer 15B of the porous carbon sheet 15S.

The flow channel 33A can be created inside the porous carbon sheet 15S as follows, for example by stacking multiple carbon fiber sheets varying in porosity. Such multiple carbon fiber sheets may alternatively be, for example, carbon fiber sheets varying in the density of carbon fibers.

The number of carbon fiber sheets stacked in Fig. 5, moreover, is merely an example and is not the only possible choice. For example, there may be an intermediate layer (not illustrated), between the carbon fiber sheet corresponding to the first surface layer 15B and that corresponding to the second surface layer 15A, that includes a fired form of a carbon fiber sheet impregnated with a thermosetting resin and in which the porosity is smaller than in the first surface layer 15B and larger than in the second surface layer 15A.

First, the carbon fiber sheet with a lower density of carbon fibers (hereinafter the first carbon fiber sheet) is cut using an appropriate die (not illustrated) to have a slit therein as a precursor to the flow channel 33A, for example one having a serpentine shape in plan view.

Then the surface of the first carbon fiber sheet is coated with a thermosetting resin. The thermosetting resin penetrates from the surface of the first carbon fiber sheet except where the slit has been made. The fluidity of the thermosetting resin has been set as required to prevent the slit in the first carbon fiber sheet from being sealed by the thermosetting resin.

Then the carbon fiber sheet with a higher density of carbon fibers (hereinafter the second carbon fiber sheet) is coated with a thermosetting resin. The thermosetting resin penetrates from the entire surface of the second carbon fiber sheet.

Then the first carbon fiber sheet impregnated with a thermosetting resin and the second carbon fiber sheet, impregnated with a thermosetting resin are stacked together. The thermosetting resins in the first and second carbon fiber sheets polymerize, joining the two sheets together.

Then the stack of the first and second carbon fiber sheets is fired, for example in a reducing atmosphere, such as one filled with nitrogen gas.

In such a way, the porous carbon sheet 15S in Fig. 5 is obtained. That is, the fired form of the first carbon fiber sheet impregnated with a thermosetting resin corresponds to the first surface layer 15B, which is on the anode separator 17 side, of the porous carbon sheet 15S in Fig. 5. The fired form of the second carbon fiber sheet impregnated with a thermosetting resin corresponds to the second surface layer 15A, which is on the anode catalyst layer 13 side, of the porous carbon sheet 15S in Fig. 5.

These production and structure of the porous carbon sheet 15S, however, are merely examples and are not the only possible choices.

The electrochemical hydrogen pump 100 in this embodiment, therefore, has a flow channel 33A in the first surface layer 15B, which is on the anode separator 17 side, of the porous carbon sheet 15S, and this ensures water present inside the flow channel 33A is easily drained from the porous carbon sheet 15S, for example on a stream of hydrogen-containing gas through the porous carbon sheet 15S. By virtue of this, the electrochemical hydrogen pump 100 in this embodiment is not prone to water flooding at the anode gas diffusion layer 15 and, as a result, maintains adequate gas diffusion at the anode AN.

The electrochemical hydrogen pump 100 in this embodiment, moreover, allows the manufacture to create a flow channel 33A for a hydrogen-containing gas with ease, for example by die shaping, in the first surface layer 15B, which is on the anode separator 17 side, of the porous carbon sheet 15S. The electrochemical hydrogen pump 100 in this embodiment therefore enables easier creation of a flow channel, for example in comparison with the case in which a metal anode separator 17 is cut to create a flow channel for a hydrogen-containing gas.

Except for the feature described above, the electrochemical hydrogen pump 100 in this embodiment may be the same as the electrochemical hydrogen pump 100 in Embodiment 1.

### (Embodiment 3)

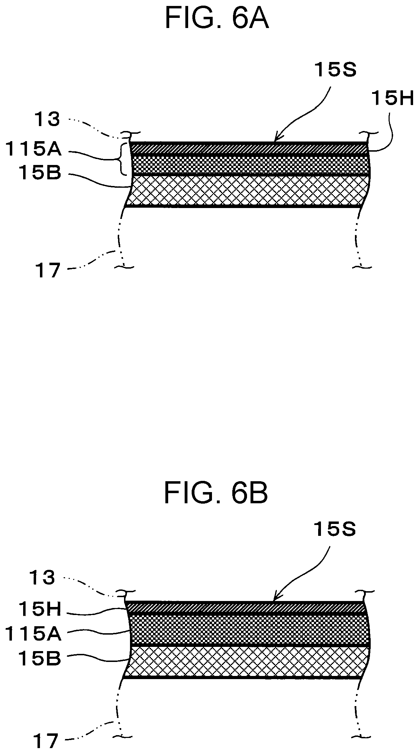

Fig. 6A is a diagram illustrating an example of a porous carbon sheet in an electrochemical hydrogen pump in Embodiment 3.

The porous carbon sheet 15S of the electrochemical hydrogen pump 100 in Embodiment 3 is the same as in the electrochemical hydrogen pump 100 in Embodiment 1 except that the second surface layer 115A includes a water-repellent layer 15H.

As stated, as the hydrogen gas pressure at the cathode CA increases, flooding becomes more likely to occur at the anode gas diffusion layer 15 of the anode AN because of water pushed back to the anode AN.

As a solution to this, in the electrochemical hydrogen pump 100 in this embodiment, the porous carbon sheet 15S is water-repellent by virtue of the water-repellent layer 15H included in its second surface layer 115A, which is on the anode catalyst layer 13 side. For example, if the second surface layer 115A is a sintered material made from carbon fibers, the porous carbon sheet 15S may be formed so that this second surface layer 115A will include a water-repellent layer 15H as illustrated in Fig. 6A by impregnating the sintered material with a material containing a water-repellent resin, such as a fluoropolymer. This ensures even if water is pushed back to the anode AN because of a differential pressure between the cathode CA and the anode AN, the water is drained quickly on a stream of hydrogen-containing gas at the water-repellent layer 15H. The electrochemical hydrogen pump 100 in this embodiment is therefore not prone to water flooding at the anode gas diffusion layer 15 and, as a result, maintains adequate gas diffusion at the anode AN.

The material containing a water-repellent resin can be, for example, a solution of dispersed fine powder of PTFE in a solvent.

The water-repellent layer 15H, moreover, may be a layer that contains a water-repellent resin and carbon black. In this case, impregnating the second surface layer 115A with a material containing a water-repellent resin and carbon black gives a water-repellent layer 15H included in the second surface layer 115A. The material containing a water-repellent resin and carbon black can be, for example, a solution of dispersed fine powder of PTFE and carbon black in a solvent. This ensures, by virtue of the presence of a water-repellent resin and carbon black in the water-repellent layer 15H, the anode gas diffusion layer 15 exhibits adequate water repellency.

These production and structure of a water-repellent layer 15H, however, are merely examples and are not the only possible choices.

Except for the feature described above, the electrochemical hydrogen pump 100 in this embodiment may be the same as the electrochemical hydrogen pump 100 in Embodiment 1 or 2.

### (Variation)

Fig. 6B is a diagram illustrating an example of a porous carbon sheet in an electrochemical hydrogen pump in a variation of Embodiment 3.

The porous carbon sheet 15S of the electrochemical hydrogen pump 100 in this variation is the same as in the electrochemical hydrogen pump 100 in Embodiment 1 except that it has a water-repellent layer 15H on its second surface layer 115A.

In the electrochemical hydrogen pump 100 in this variation, the porous carbon sheet 15S is water-repellent by virtue of the water-repellent layer 15H disposed on its second surface layer 115A, which is on the anode catalyst layer 13 side. The formation of a water-repellent layer 15H on the second surface layer 115A as illustrated in Fig. 6B can be done by, for example, applying a material containing a water-repellent resin, such as a fluoropolymer, to the second surface layer 115A. This ensures even if water is pushed back to the anode AN because of a differential pressure between the cathode CA and the anode AN, the water is drained quickly on a stream of hydrogen-containing gas at the water-repellent layer 15H. The electrochemical hydrogen pump 100 in this embodiment is therefore not prone to water flooding at the anode gas diffusion layer 15 and, as a result, maintains adequate gas diffusion at the anode AN.

The material containing a water-repellent resin can be, for example, a solution of dispersed fine powder of PTFE in a solvent. The method for the application of the material containing a water-repellent resin can be, for example, spray coating.

The water-repellent layer 15H, moreover, may be a layer that contains a water-repellent resin and carbon black. In this case, applying a material containing a water-repellent resin and carbon black to the second surface layer 115A gives a water-repellent layer 15H on the second surface layer 115A. The material containing a water-repellent resin and carbon black can be, for example, a solution of dispersed fine powder of PTFE and carbon black in a solvent. The method for the application of the material containing a water-repellent resin and carbon black can be, for example, spray coating. This ensures, by virtue of the presence of a water-repellent resin and carbon black in the water-repellent layer 15H, the anode gas diffusion layer 15 exhibits adequate water repellency.

These production and structure of a water-repellent layer 15H, however, are merely examples and are not the only possible choices.

Except for the feature described above, the electrochemical hydrogen pump 100 in this variation may be the same as the electrochemical hydrogen pump 100 in Embodiment 1 or 2.

Embodiment 1, Embodiment 2, Embodiment 3, and the variation of Embodiment 3 may be combined unless mutually exclusive.

From the foregoing description, many improvements to and other embodiments of the present disclosure are apparent to those skilled in the art. The foregoing description should therefore be construed only as an illustration and is provided in order to teach those skilled in the art the best mode of carrying out the present disclosure. The details of the structures and/or functions set forth herein can be substantially changed without departing from the spirit of the present disclosure.

An aspect of the present disclosure is applicable to electrochemical hydrogen pumps that can be less prone to water flooding at their anode gas diffusion layer than in the related art.

### Reference Signs List

- 11:: Electrolyte membrane
- 12:: Cathode catalyst layer
- 13:: Anode catalyst layer
- 14:: Cathode gas diffusion layer
- 15:: Anode gas diffusion layer
- 15A:: Second surface layer
- 15B:: First surface layer
- 15H:: Water-repellent layer
- 15S:: Porous carbon sheet
- 16:: Cathode separator
- 17:: Anode separator
- 21:: Insulator
- 22A:: Anode feed plate
- 22C:: Cathode feed plate
- 23A:: Anode insulating plate
- 23C:: Cathode insulating plate
- 24A:: Anode end plate
- 24C:: Cathode end plate
- 25:: Fastener
- 26:: Cathode gas outlet line
- 27:: Anode gas inlet manifold
- 29:: Anode gas inlet line
- 30:: Anode gas outlet manifold
- 31:: Anode gas outlet line
- 32:: Cathode gas flow channel
- 33:: Anode gas flow channel
- 33A:: Flow channel
- 34:: Cathode gas conduit
- 35:: First anode gas conduit
- 36:: Second anode gas conduit
- 40:: Sealing element
- 42:: Sealing element
- 43:: Sealing element
- 50:: Cathode gas outlet manifold
- 100:: Electrochemical hydrogen pump
- 100A:: Hydrogen pump unit
- 102:: Voltage applicator
- 115A:: Second surface layer
- AN:: Anode
- CA:: Cathode

## Claims

1. An electrochemical hydrogen pump comprising:
an electrolyte membrane;
an anode catalyst layer on one primary surface of the electrolyte membrane;
a cathode catalyst layer on the other primary surface of the electrolyte membrane;
an anode gas diffusion layer on the anode catalyst layer;
an anode separator on the anode gas diffusion layer; and
a voltage applicator that applies a voltage between the anode catalyst layer and the cathode catalyst layer, wherein:
the electrochemical hydrogen pump is configured to, through application of the voltage by the voltage applicator, cause hydrogen in a hydrogen-containing gas supplied to above the anode catalyst layer to move above the cathode catalyst layer and to be pressurized, and
the anode gas diffusion layer includes a porous carbon sheet that contains carbon fibers and a carbon material different from the carbon fibers and that has a larger porosity in a first surface layer, which is on an anode separator side, than in a second surface layer, which is on an anode catalyst layer side.

2. The electrochemical hydrogen pump according to Claim 1, wherein the porous carbon sheet has a lower carbon density in the first surface layer than in the second surface layer.

3. The electrochemical hydrogen pump according to Claim 1, wherein the porous carbon sheet has a lower density of the carbon material in the first surface layer than in the second surface layer.

4. The electrochemical hydrogen pump according to Claim 1, wherein the carbon material in the porous carbon sheet is a carbonized thermosetting resin.

5. The electrochemical hydrogen pump according to Claim 1, wherein the porous carbon sheet has a lower density of the carbon fibers in the first surface layer than in the second surface layer.

6. The electrochemical hydrogen pump according to Claim 1, wherein the porous carbon sheet contains a flow channel for the hydrogen-containing gas in the first surface layer.

7. The electrochemical hydrogen pump according to Claim 1, wherein the porous carbon sheet contains a water-repellent layer in the second surface layer.

8. The electrochemical hydrogen pump according to Claim 1, wherein the porous carbon sheet contains a water-repellent layer on the second surface layer.

9. The electrochemical hydrogen pump according to Claim 7, wherein the water-repellent layer contains a water-repellent resin and carbon black.
